Europäisches Patentamt

European Patent Office

Office européen des brevets

(19)

(11) Veröffentlichungsnummer: **0 412 493 A2**

(12) # EUROPÄISCHE PATENTANMELDUNG

(21) Anmeldenummer: 90115130.8

(51) Int. Cl.⁵: **B29C 45/14**

(22) Anmeldetag: 07.08.90

(30) Priorität: 11.08.89 DE 3926580
04.09.89 DE 3929299

(43) Veröffentlichungstag der Anmeldung:
13.02.91 Patentblatt 91/07

(84) Benannte Vertragsstaaten:
AT BE CH DE DK ES FR GB IT LI LU NL SE

(71) Anmelder: LEONHARD KURZ GMBH & CO.
Schwabacher Strasse 482
D-8510 Fürth/Bayern(DE)

(72) Erfinder: Brehm, Ludwig, Dr., Dipl.-Chem.
Siebenbürgenstrasse 6
D-8551 Hemhofen(DE)

(74) Vertreter: LOUIS, PÖHLAU, LOHRENTZ &
SEGETH
Kesslerplatz 1 Postfach 3055
D-8500 Nürnberg-1(DE)

(54) Verfahren zur Herstellung von Karten.

(57) Es wird ein Verfahren zur Herstellung von Karten
(42) unter Verwendung einer Prägefolie (30) beschrieben, die auf einer Trägerfolie (38) eine Dekorlage (36) aufweist. Die Prägefolie (30) wird auf einem
der Karte (42) volumenmäßig entsprechenden Hohlraum (16) einer eine Einspritzöffnung (22) aufweisenden Form (10) angeordnet, wonach der Hohlraum
(16) der Form (10) verschlossen und mit einer
Kunststoffspritzmasse (44) ausgefüllt wird. Die Dekorlage (36) der Prägefolie (30) weist zwei Dekorschichten (48, 50) und eine zwischen den Dekorschichten (48, 50) vorgesehene opaké Zwischenschicht auf. Als Kunststoffspritzmasse (44) wird eine
glasklare Masse verwendet.

EP 0 412 493 A2

## VERFAHREN ZUR HERSTELLUNG VON KARTEN

Die Erfindung betrifft ein Verfahren zur Herstellung von Karten unter Verwendung einer Prägefolie, die auf einer Trägerfolie eine Dekorlage aufweist, wobei die Prägefolie aus Trägerfolie und Dekorlage auf einem der Karte volumenmässig entsprechenden Hohlraum einer eine Einspritzöffnung aufweisenden Form derartig angeordnet wird, dass die Dekorlage der Einspritzöffnung zugewandt ist, wonach der Hohlraum der Form verschlossen und durch die Einspritzöffnung hindurch der Hohlraum der Form mit einer Kunststoffspritzmasse ausgefüllt wird.

Bei derartigen Karten handelt es sich bspw. um Ausweis-, Kredit-, Zeiterfassungskarten o.dgl.

Ein Verfahren der eingangs genannten Art ist aus der DE-Z "Plastverarbeiter", 1986, Nr. 7, Seiten 84 bis 90 bekannt, wobei in diesem Zeitschriftenartikel nicht explizit von Karten die Rede ist, sondern von zu dekorierenden Teilen allgemein. Bei diesem bekannten Verfahren kommen jedoch nur Prägefolien zur Anwendung bei welchen auf einer Trägerfolie eine Dekorlage vorgesehen ist, die eine einzige Dekorschicht aufweist. Mit einer solchen Prägefolie ist es folglich auch nur möglich, Teile bzw. Karten herzustellen, die nur auf einer einzigen Seite mit einem Dekor ausgebildet sind. Ein Hinweis darauf, Teile bzw. Karten herzustellen, die auf ihren beiden voneinander abgewandten Seiten mit je einem Dekor ausgebildet sind, ist dem oben zitierten Stand der Technik nicht zu entnehmen.

Sollen mit diesem bekannten Verfahren Teile bzw. Karten auf ihren beiden voneinander abgewandten Seiten mit je einem Dekor versehen werden, so gibt dieser Stand der Technik dem Fachmann nur die Anregung, jede der beiden Seiten der Karte mit einer eigenen Prägefolie zu beprägen, die eine Dekorlage mit einer Dekorschicht aufweist. Das bedingt also zwei entsprechende Prägefolien, die passend gehandhabt werden müssen, was einen erheblichen Aufwand darstellt, der sich auf die Produktivität des Herstellungsverfahrens nachteilig auswirkt. Ein weiterer Mangel eines solchen Verfahrens besteht darin, dass die gegenseitige passgenaue Zuordnung der beiden Dekore bzw. Prägefolien sehr aufwendig ist. Hier schafft die vorliegende Erfindung auf ebenso einfache wie wirkungsvolle Weise Abhilfe, der die Aufgabe zugrunde liegt, ein Verfahren der eingangs genannten Art zu schaffen, mit welchem es möglich ist, Karten innerhalb kurzer Taktzeiten herzustellen, die beidseitig dekoriert sein können, wobei die beiden Dekore aneinander sehr genau angepasst sind.

Diese Aufgabe wird erfindungsgemäß dadurch gelöst, dass eine Prägefolie verwendet wird, deren Dekorlage zwei Dekorschichten und eine zwischen den beiden Dekorschichten vorgesehene opake Zwischenschicht aufweist, und dass eine glasklare Kunststoffspritzmasse verwendet wird. Mit diesem Verfahren ist es einfach und innerhalb kurzer Taktzeiten möglich, Karten herzustellen, die an ihren beiden gegenüberliegenden Seiten, d.h. Hauptflächen mit je einem Dekor versehen sind, wobei die beiden Dekore einander präzise zugeordnet sind, und wobei zur Durchführung des Verfahrens nur eine einzige Prägefolie anstelle zweier voneinander getrennter unabhängiger Prägefolien erforderlich ist.

Als Kunststoffspritzmasse wird vorzugsweise eine glasklare Kunststoffspritzmasse verwendet. Für bestimmte Anwendungsfälle wäre es auch möglich, anstelle einer glasklaren Kunststoffspritzmasse eine durchscheinende oder eine anders optisch strukturierte Kunststoffspritzmasse anzuwenden, mit welcher besondere optische Effekte erzielbar wären.

Damit die Kunststoffspritzmasse den der Karte entsprechenden Hohlraum der Form bei der Durchführung des Verfahrens sicher vollständig ausfüllt, so dass ein Produktionsausschuss verhindert wird, hat es sich als vorteilhaft erwiesen, wenn eine niedrigschmelzende, niedrigviskose Kunststoffspritzmasse verwendet wird. Hierbei kann es sich z.B. um Polystyrol, PVC, ABS, SAN, PC o.dgl. handeln.

Als Material für die Trägerfolie der Prägefolie kommt z.B. Polyester, Celluloseacetat, Cellophan, Polyimid, Polyphenylensulfid o.dgl. zur Anwendung.

Weitere Einzelheiten ergeben sich aus der nachfolgenden Beschreibung einer in der Zeichnung schematisch dargestellten Vorrichtung zur Durchführung des erfindungsgemässen Verfahrens zur Herstellung von Karten. Es zeigt:

Fig. 1 einen Schnitt durch eine schematisch verdeutlichte Vorrichtung zur Herstellung von Karten und

Fig. 2 eine Schnittdarstellung einer Ausführungsform der mit dem erfindungsgemässen Verfahren hergestellten Karte in einem stark vergrößerten Maßstab.

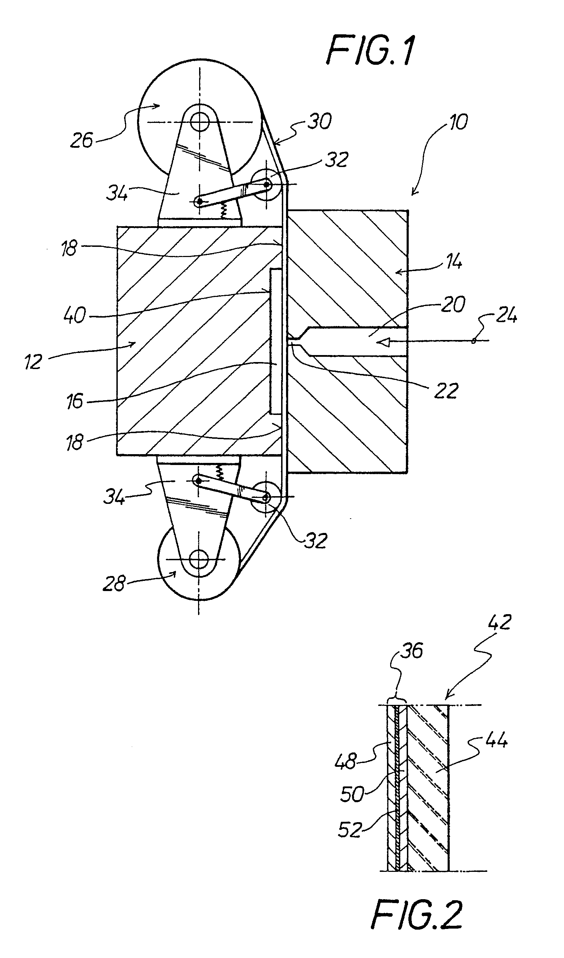

Fig. 1 zeigt eine Form 10 mit einem ersten Formteil 12 und mit einem zweiten Formteil 14. Das erste Formteil 12 weist einen einer Karte entsprechenden Hohlraum 16 auf. Der Hohlraum 16 ist von einem Anlageabschnitt 18 umgeben. Das zweite Formteil 14 ist mit einem Einspritzkanal 20 ausgebildet, der mit einer Einspritzöffnung 22 in den Hohlraum 16 des ersten Formteils 12 der Form 10 einmündet. Durch den Einspritzkanal 20 des zweiten Formteils 14 ist es möglich, in den Hohlraum 16 im verschlossenen Zustand der Form 10, in welchem das zweite Formteil 14 eng und abdichtend am Anlageabschnitt 18 des ersten Formteils 12 anliegt, eine Kunststoffspritzmasse einzubringen, was in dieser Figur durch den Pfeil 24 angedeutet ist.

An dem ersten Formteil 12 ist eine Abwickelrolle 26 und eine Aufwickelrolle 28 drehbar gelagert. Eine auf der Abwickelrolle 26 aufgewickelte Prägefolie 30 wird von der Abwickelrolle 26 abgewickelt und durch die beiden Formteile 12 und 14 der Form 10 durchgeleitet. Führungsrollen 32, die bspw. an zu der Abwickelrolle 26 bzw. der Aufwickelrolle 28 zugehörigen Konsolen 34 federnd schwenkbeweglich gelagert sind, dienen dazu, die Prägefolie 30 genau richtig lokalisiert zwischen den beiden Formteilen 12 und 14 der Form 10 durchzuleiten. Die Prägefolie 30, die in Fig. 2 in einem stark vergrösserten Maßstab abschnittweise gezeichnet ist, wird zwischen den beiden Formteilen 12 und 14 durchgeführt. Bei der Trägerfolie 38 handelt es sich vorzugsweise um eine ABS-Folie geringer Stärke.

Die Prägefolie 30 wird mit der Dekorlage 36 über dem Hohlraum 16 derart angeordnet, dass die Dekorlage 36 in Bezug auf den Hohlraum 16 genau passend ausgerichtet ist, wonach an dem ersten Formteil 12 das zweite Formteil 14 abdichtend angeordnet wird. Nachfolgend kann durch den Spritzkanal 20 die Kunststoffspritzmasse eingebracht werden, wobei die Prägefolie 30 an die Innenkontur 40 des Hohlraums 16 des ersten Formteils 12 eng und faltenfrei angelegt wird. Durch geeignete Wahl des Spritzdruckes der Kunststoffspritzmasse ergibt sich der Vorteil, dass mögliche Poren der Prägefolie 30 ausgefüllt werden, wodurch sich nicht nur eine sehr glatte Oberfläche der auf diese Weise hergestellten Karte, sondern auch eine gute Verbindung zwischen dem Dekor und der Kunststoffspritzmasse für die Karte ergibt. Nach dem Öffnen der Form 10 kann die Trägerfolie 38 von der so hergestellten Karte abgezogen und auf die Aufwickelrolle 28 aufgewickelt werden.

Fig. 2 verdeutlicht abschnittweise eine Karte 42, die eine Dekorlage 36 mit zwei Dekorschichten 48 und 50 und einer zwischen den beiden Dekorschichten 48 und 50 vorhandenen opaken Zwischenschicht 52 aufweist. Mit der Bezugsziffer 44 ist die ausgehärtete Kunststoffspritzmasse bezeichnet, bei der es sich vorzugsweise um eine glasklare oder gegebenenfalls um eine mindestens durchscheinende Kunststoffspritzmasse handelt, um die Dekorschicht 50 sichtbar zu machen. Auf der Dekorschicht 48 kann eine an sich bekannte Schutzlackschicht angeordnet sein, um die Dekorschicht 48 gegen Einwirkungen von aussen zu schützen.

Nachdem mit der Kunststoffspritzmasse 44 Dickenunterschiede der Dekorlage 36 bzw. der Dekorschicht 50 der zwei Dekorschichten aufweisenden Dekorlage 36 ohne weiteres ausgleichbar sind, ist es möglich, die Dekorlage 36 bzw.die zur Kunststoffspritzmasse 44 unmittelbar benachbarte Dekorschicht 50 als Mehrfarbendruckschicht auszubilden, ohne dass sich die hierdurch gegebenen unterschiedlichen Dicken an der fertigen Karte störend bemerkbar machen.

## Ansprüche

1. Verfahren zur Herstellung von Karten (42) unter Verwendung einer Prägefolie (30), die auf einer Trägerfolie (38) eine Dekorlage (36) aufweist, wobei die Prägefolie (30) aus Trägerfolie (38) und Dekorlage (36) auf einem der Karte (42) volumenmässig entsprechenden Hohlraum (16) einer eine Einspritzöffnung (22) aufweisenden Form (10) derartig angeordnet wird, dass die Dekorlage (36) der Einspritzöffnung (22) zugewandt ist, wonach der Hohlraum (16) der Form (10) verschlossen und durch die Einspritzöffnung (22) hindurch der Hohlraum (16) der Form (10) mit einer Kunststoffspritzmasse (44) ausgefüllt wird,
**dadurch gekennzeichnet**
, dass eine Prägefolie (30) verwendet wird, deren Dekorlage (36) zwei Dekorschichten (48, 50) und eine zwischen den beiden Dekorschichten (48, 50) vorgesehene opake Zwischenschicht (52) aufweist, und dass eine glasklare Kunststoffspritzmasse (44) verwendet wird.

2. Verfahren nach Anspruch 1,
**dadurch gekennzeichnet**
, dass eine niedrigschmelzende, niedrigviskose Kunststoffspritzmasse (44) verwendet wird.

# FIG.1

# FIG.2